# EUROPEAN PATENT SPECIFICATION

(11) **EP 1 767 324 B1**
(45) Date of publication and mention of the grant of the patent: **08.09.2010**
(21) Application number: 05758191.0
(22) Date of filing: 06.07.2005
(51) Int. Cl.: B29C 33/02, B29C 35/02

(54) **MOLDING DIES COMPRISING A TIRE-HOLDING UNIT AND METHOD FOR VULCANIZATION OF A TIRE**
FORMWERKZEUGE MIT EINER REIFENHALTEEINHEIT UND VERFAHREN ZUM VULKANISIEREN EINES REIFENS
MOULES AVEC UNE UNITÉ DE MAINTIEN DE PNEUMATIQUE ET MÉTHODE DE VULCANISATION DE PNEUMATIQUE

(30) Priority: 08.07.2004 JP 2004201675
(43) Date of publication of application: 28.03.2007
(73) Proprietor: Bridgestone Corporation, Tokyo 104-8340 (JP)
(72) Inventor: SUGIYAMA, Takeshi;, e, Chuo-ku, Tokyo 1048340; (JP)
(74) Representative: Whalley, Kevin
(86) International application number: PCT/JP2005/012458
(87) International publication number: WO 2006/006461

(56) References cited:
- JP-A- 6 055 541
- JP-A- 6 055 541
- JP-A- 8 309 755
- JP-A- 8 309 755
- US-A- 3 909 337
- US-A- 4 030 863

## Description

The present invention relates to molding dies having a tire holding unit for holding an unvulcanized tire, and a tire vulcanization method using the same, and more particularly relates to molding dies having a tire holding unit which is especially suitable for a high-weight tire, and a tire vulcanization method using the same.

For vulcanization molding of a pneumatic tire for use with passenger cars, molding dies of a type that are moved only in one direction to be opened and closed are generally used such that a green tire held by an inflated bladder is carried and placed in the lower die. However, in manufacturing a high-weight tire (a high-mass tire), such as a truck vehicle tire or a construction vehicle tire, if this type of molding die is used, a deformation of the green tire due to its own weight, such as drooping, is caused at the time of carriage, which makes it impossible to satisfactorily accommodate the green tire in the molding dies, with the result that it is not possible to achieve uniform vulcanization. Therefore, for vulcanization molding of this kind of high-weight tire, molding dies constituted by three-division members of an upper die, a middle die, and a lower die are used, the upper die being moved in the vertical direction and the middle die in the horizontal direction for opening and closing the dies (see, for example, patent document 1).

Hereinbelow, a conventional molding die for use in manufacturing a high-weight tire will be described with reference to an example, and an attached drawing.

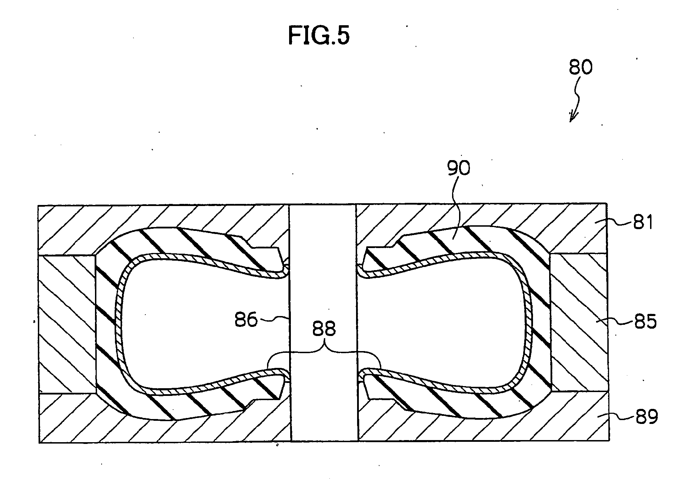

As shown in Fig. 5, a conventional molding die 80 for vulcanizing a high-weight tire includes a center post 86; a bladder 88 mounted to the center post 86; an upper die 81 for molding one of the tire side faces; a lower die 89 for molding the other side face; and a middle die 85 for molding a tread part.

In order to carry out vulcanization molding with the molding die 80, a green tire 90 is placed on the lower die 89; and the dies are put into a closed state using the middle die 85 and the upper die 81, and vulcanization molding is carried out. The internal pressure of green tire 90 is set at a predetermined value by means of the bladder 88.
Patent document 1: Japanese Patent Application Laid-Open No. 1-301233
Attention is also drawn to the disclosures of JP-06-055541A, US-A-4030863, and JP-08-309755A.

Moving the upper die in the vertical direction and the middle die in the horizontal direction in this way has presented the problems that the apparatus configuration is rendered complicated; pattern design is restricted; and, further, improvement in productivity is hindered. In addition, there has arisen another problem that, when the green tire is carried to the lower die and placed thereon, the green tire tends to be deformed under its own weight.

The present invention has been made in view of the above-stated situation, and the purpose thereof is to provide molding dies having a convenient-to-use tire holding unit which allows the vulcanization molding to be efficiently carried out, and prevents the green tire from being deformed, and a tire vulcanization method using the same.

The present inventor has noticed that, when vulcanizing a pneumatic tire for use with passenger cars, it is effective to control the air filling pressure for the bladder at a low value in order to be able to uniformly place the green tire in the molding dies. However, a high-weight tire is heavy, and thus lowering the air filling pressure for the bladder causes a deformation of the green tire mainly due to drooping, which makes it impossible to carry out uniform vulcanization. Therefore, for a high-weight tire, the air filling pressure for the bladder cannot be lowered.

Then, after intensive research, the present inventor conceived of assembling a flange-like die part extending from the bead to the rim line at the center post for performing molding to allow a high-weight green tire to be supported by this flange-like die part during carriage. However, the result was that drooping was only slightly alleviated, and the problem was not solved.

Then, after further intensive research, the present inventor conceived of further widening the flange-like die part, and conducted further investigation to accomplish the present invention.

The invention according to claim 1 provides molding dies comprising a tire holding unit as a constituent member thereof, wherein the tire holding unit comprises a center post which is disposed at a center of the molding dies for vulcanization; a bladder which is mounted to the center post; and a central upper die part and a central lower die part which form a part of the molding dies, and are mounted to the center post on either end side of the bladder, respectively, wherein the central upper die part is freely mountable to and dismountable from the center post, and an outside edge in a radial direction of the central lower die part is located at an outer side in the die radial direction of a location that corresponds to half a tire section height of the molding dies.

The central lower die may be discoid or radial when viewed from the center post direction.

In order to use the molding dies of the invention according to claim 1 for vulcanization molding, the center post of the tire holding unit is removed from the molding dies, and a green tire is fitted to the center post in a state in which the central lower die part is mounted to this center post.

Then, the central upper die part is mounted to the center post, and the bladder is inflated in the green tire to provide a prescribed air filling pressure for supporting the green tire from the inside of the tire, whereby the green tire is held by the tire holding unit.

Then, in a state in which the tire holding unit is oriented to be loaded on the molding dies, i.e. in a state in which the central lower die part is at a lower side, and the central upper die part is at an upper side, the tire holding unit which holds the green tire is carried to the molding dies.

In this state, the outside edge in a radial direction of the die (die-radial outside edge) of the central lower die part is located at an outside in a die radial (tire-radial) direction of a location which corresponds to half the tire section height of the molding dies. Thereby, when carrying out the above-stated carriage, even if the weight of the green tire is heavy, deformation of the green tire under its own weight, such as drooping, can be prevented.

If the die-radial outside edge of the central lower die part were not located die-radially outside of the location which corresponds to half the section height for the molding dies, the green tire would tend to be deformed under its own weight, which is undesirable.

Thereby, even when the tire holding unit that has been carried to the molding dies is loaded on the molding dies for vulcanization molding, the vulcanization can be uniformly and satisfactorily carried out.

With the tire holding unit, the die-radial outside edge of the central lower die part is located tire-radially outside of the location which corresponds to half the tire section height for the molding dies, and thus during carriage, the deformation of the green tire under its own weight is prevented. Therefore, even if a green tire of high weight is carried in a state in which the internal pressure of the bladder is lower than normal, the green tire will not be deformed under its own weight. On the other hand, if the internal pressure of the bladder is lower, the diameter of the green tire which is held by the tire holding unit can be made smaller. Therefore, even if a configuration is adopted in which the die part which forms the tread part is integrally formed with the upper and lower dies, and the number of moving directions is limited to two, instead of a configuration in which the die members constituting the molding dies are individually moved in the vertical direction and the horizontal direction, respectively, the internal pressure of the bladder can be reduced, and the green tire can be loaded into the molding dies from above.

Further, the invention according to claim 2 provides molding dies of claim 1 which are used for vulcanization molding of a high weight tire, wherein the die member which is butted against the tire external surfaces is constituted by an upper die and a lower die; the central upper die part constitutes a part of the upper die; and the central lower die part constitutes a part of the lower die.

Thereby, the degree of freedom for pattern design is remarkably increased, and the configuration of the molding dies is simplified, resulting in the productivity being improved.

The invention according to claim 3 provides a tire vulcanization method using the molding dies according to claim 2, including: a green tire being fitted to the center post which has been removed from the molding dies, the green tire being sandwiched between the central upper die part and the central lower die part, and the bladder being inflated in the green tire with an air filling pressure of 50 kPa or lower, whereby the green tire is held by the tire holding unit; the tire holding unit being carried to above the lower die, and being lowered to load the green tire and the tire holding unit onto the lower die, and the molding dies being closed for vulcanization.

As described above deformation of the green tire under its own weight during carriage is prevented by the central lower die part. Therefore, even for a high-weight tire, the air filling pressure of the bladder can be reduced to 50 kPa or lower, which is approximately half or less compared to that for a conventional system.

Therefore, even if, by the invention according to claim 3, the variation in growth of the green tire is held to half or less compared to that for a conventional system, satisfactory vulcanization molding can be carried out.

Because the present invention is configured as described above, the vulcanization molding can be efficiently carried out, and molding dies having a convenient-to-use tire holding unit with which the deformation of the green tire is prevented, and a tire vulcanization method using the same can be realized.
The invention will be further described with reference to the accompanying drawings, wherein

Fig. 1 is a sectional view in a tire radial direction illustrating a green tire before being fitted to a center post in one embodiment of the present invention;
Fig. 2 is a side sectional view illustrating the green tire being held in a tire holding unit in the same embodiment;
Fig. 3 is a side sectional view illustrating the green tire held in the tire holding unit in the same embodiment;
Fig. 4 is a side sectional view illustrating the tire holding unit which holds the green tire having been set in molding dies in the same embodiment; and
Fig. 5 is a side sectional view illustrating vulcanization molding being carried out with conventional molding dies.

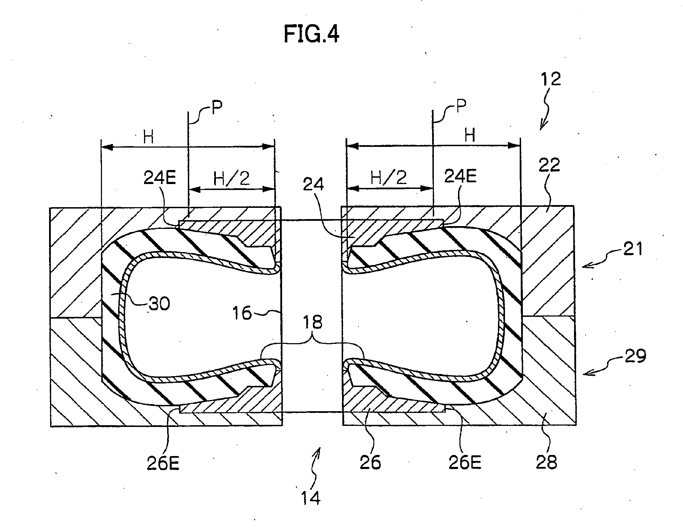

Hereinbelow, an embodiment of the present invention will be described. As shown in Fig. 4, molding dies 12 according to one embodiment of the present invention are dies for ultra-large ORR tires, including a tire holding unit 14 which is freely mountable to and dismountable from the dies.

The tire holding unit 14 includes a center post 16 which is freely mountable to and dismountable from the molding dies 12, and a bladder 18 which is mounted to the center post 16. In addition, the tire holding unit 14 includes a central upper die part 24 and a central lower die part 26 which constitute the molding dies 12 for tire vulcanization molding, respectively mounted to the center post 16 at either end side of the bladder. Both of the central upper die part 24 and the central lower die part 26 are freely mountable to and dismountable from the center post 16.

Both of the die-radial outside edges 24E, 26E of the central lower die part 26 and the central upper die part 24 are located die-radially outside of the die-radial height location P which corresponds to half the tire section height H for the molding dies 12. The central upper die part 24 and the central lower die part 26 are substantially discoid when viewed from top, and both of the respective die-radial outside edges 24E, 26E are circumferential.

As is well known, the tire section height H is a dimension measured along the tire radial direction from the datum line, which is parallel with the tire rotation axis and passes through the point of intersection between a straight line passing through the bead seat and an extension line of the internal wall surface of the rim flange that is perpendicular to the tire rotation axis, to the tire-radially outermost location.

In addition, the molding dies 12 include an upper die main body 22 and a lower die main body 28 which are vertically divided substantially at the tire equatorial plane of the tire which is accommodated therein, and the upper die main body 22 is vertically movable such that the tire can be placed in and removed from the molding dies 12. With this configuration, the die member which is butted against the tire outside surfaces is constituted by an upper die 21 made up of the upper die main body 22 and the central upper die part 24, and a lower die 29 made up of the lower die main body 28 and the central lower die part 26.

In order to carry out vulcanization molding using the molding dies 12, the center post 16 is first removed from the molding dies 12. To this center post 16, the central lower die part 26 is mounted, being oriented in the same direction as when loaded on the molding dies 12.

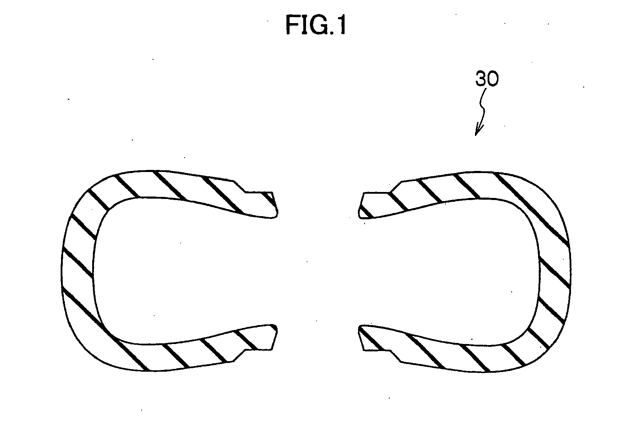

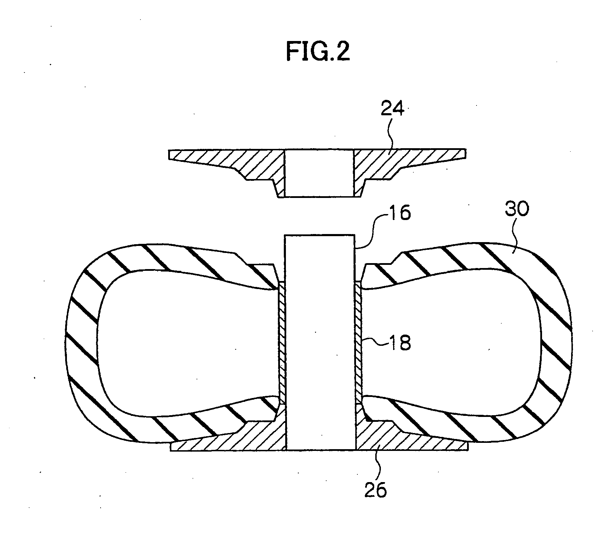

Then, a green tire 30 (see Fig. 1) is fitted to the center post 16 to cause the central lower die part 26 to support this green tire 30 (see Fig. 2).

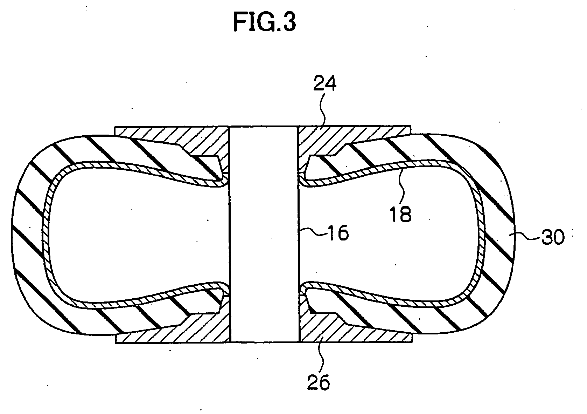

Further, as shown in Fig. 3, the central upper die part 24 is mounted to the center post 16 to sandwich the green tire 30 between the central upper die bladder 18 and the central lower die part 26, and the bladder 18 is inflated with an air filling pressure of 50 kPa or lower to support the green tire 30 from the inside of the tire, thereby holding the green tire 30 with the tire holding unit 14.

Then, by raising the upper die main body 22, the molding dies 12 are opened, and the tire holding unit 14 is carried to above the lower die main body 28 to be lowered to load the green tire 30 held by the tire holding unit 14 to the lower die main body 28 by insertion.

Then, by lowering the upper die main body 22, the molding dies 12 are closed (see Fig. 4).

Further, metal fittings (not shown) are used for tightening the dies from the outside, and the internal pressure of the bladder 18 is further increased to cause the green tire 30 to be tightly contacted with the die surfaces of the molding dies 12, and the vulcanization molding is carried out.

The tread pattern may be formed by carrying out cutting, or the like, after the vulcanization molding rather than performing the formation thereof with the molding dies 12.

As described above, in the present embodiment, the die-radial outside edge 26E of the central lower die part 26 is located tire-radially outside (die-radially outside) of the die-radial height location P which corresponds to half the tire section height H of the molding dies 12, and thus deformation of the green tire 30 during carriage under its own weight can be fully prevented. In addition, the internal pressure of the bladder 18 is at 50 kPa or lower, and the tire diameter of the green tire 30 which is carried is relatively small.

Thereby, when carrying the tire holding unit 14 to the lower die main body 28 in this state, deformation of the green tire 30 under its own weight, such as drooping, can be prevented even if the weight of the green tire 30 is heavy. In addition, even with dies of the type in which the molding dies 12 are opened and closed by moving only in the vertical direction, deformation of the green tire 30 during carriage under its own weight, such as drooping, can be prevented, which allows uniform vulcanization, resulting in the productivity being improved. In addition, even for the green tire 30 from which a high-weight tire is to be molded, the air filling pressure to the bladder 18 may be set at 50 kPa or lower, which is approximately half or less of that which is conventionally used, and thus the variation in inflation of the green tire 30 can be held to half or less of a conventional one, which allows vulcanization molding to be satisfactorily carried out.

Hereinabove, an embodiment of the present invention has been described, however, the above embodiment is only one example, and it may be variously modified within the scope of the invention.

As described above, the molding dies having tire holding unit of the present invention, and the tire vulcanization method using the same allow vulcanization molding to be efficiently carried out, and are very suitable for use as those which are capable of preventing deformation of the green tire.

## Claims

1. Molding dies comprising a tire holding unit (14) as a constituent member thereof, wherein the tire holding unit comprises:
a center post (16) which is disposed at a center of the molding dies (12) for vulcanization;
a bladder (18) which is mounted to the center post; and
a central upper die part (24) and a central lower die part (26) which form a part of the molding dies, and are mounted to the center post on either end side of the bladder, respectively,
the central upper die part (24) being freely mountable to and dismountable from the center post (16),
**characterized in that**
an outside edge (26E) in a radial direction of the central lower die part (26) is located at an outer side in the die radial direction of a location that corresponds to half a tire section height (H) of the molding dies (12).

2. Molding dies as claimed in claim 1, which are used for vulcanization molding of a high weight tire, wherein
a die member that is butted against outside surfaces of the tire is structured by an upper die (21) and a lower die (29),
the central upper die part (24) constitutes a part of the upper die, and
the central lower die part (26) constitutes a part of the lower die.

3. A tire vulcanization method using the molding dies according to claim 2, comprising:
a green tire (30) being fitted to the center post (16) which has been removed from the molding dies (12),
the green tire being sandwiched between the central upper die part (24) and the central lower die part (26), and the bladder (18) being inflated in the green tire with an air filling pressure of 50 kPa or lower, whereby the green tire is held by the tire holding unit (14),
the tire holding unit being carried to above the lower die (29), and being lowered to load the green tire and tire holding unit onto the lower die, and
the molding dies being closed for vulcanization.

## Patentansprüche

1. Formwerkzeuge, die eine Reifenhalteeinheit (14) als einen Bestandteil derselben umfassen, wobei die Reifenhalteeinheit Folgendes umfasst:
einen Mittelpfosten (16), der an einem Mittelpunkt der Formwerkzeuge (12) zum Vulkanisieren angeordnet ist,
einen Heizbalg (18), der an dem Mittelpfosten angebracht ist, und
einen mittigen oberen Werkzeugteil (24) und einen mittigen unteren Werkzeugteil (26), die einen Teil der Formwerkzeuge bilden und jeweils auf einer Stirnseite des Heizbalges an dem Mittelpfosten angebracht sind,
wobei der mittige obere Werkzeugteil (24) frei an dem Mittelpfosten (16) angebracht und von demselben abgebaut werden kann,
**dadurch gekennzeichnet, dass**
eine Außenkante (26E) in einer Radialrichtung des mittigen unteren Werkzeugteils (26) an einer Außenseite in der Werkzeugradialrichtung von einer Position angeordnet ist, die einer halben Reifenquerschnittshöhe (H) der Formwerkzeuge (12) entspricht.

2. Formwerkzeuge nach Anspruch 1, die zur Vulkanisationsformung eines Reifens mit hohem Gewicht verwendet werden, wobei:
ein Werkzeugelement, das an Außenflächen des Reifens angestoßen wird, durch ein oberes Werkzeug (21) und ein unteres Werkzeug (29) strukturiert wird,
der mittige obere Werkzeugteil (24) einen Teil des oberen Werkzeugs darstellt und
der mittige untere Werkzeugteil (26) einen Teil des unteren Werkzeugs darstellt.

3. Reifen-Vulkanisierverfahren unter Verwendung der Formwerkzeuge nach Anspruch 2, das Folgendes umfasst:
ein Reifenrohling (30) wird an dem Mittelpfosten (16) befestigt, der von den Formwerkzeugen (12) abgenommen worden ist,
der Reifenrohling wird zwischen dem mittigen oberen Werkzeugteil (24) und dem mittigen unteren Werkzeugteil (26) eingeklemmt, und der Heizbalg (18) wird in dem Reifenrohling mit einem Luftfülldruck von 50 kPa oder weniger aufgeblasen, wodurch der Reifenrohling durch die Reifenhalteeinheit (14) gehalten wird,
die Reifenhalteeinheit wird über das untere Werkzeug (29) befördert und wird abgesenkt, um den Reifenrohling und die Reifenhalteeinheit auf das untere Werkzeug zu laden, und
die Formwerkzeuge werden zum Vulkanisieren geschlossen.

## Revendications

1. Moules comprenant une unité de maintien de pneumatique (14) en tant qu'élément constitutif de ceux-ci, dans lesquels l'unité de maintien de pneumatique comprend :
un montant central (16) qui est disposé au niveau d'un centre des moules (12) en vue d'une vulcanisation ;
une vessie (18) qui est montée au montant central ; et
une partie de moule supérieure centrale (24) et une partie de moule inférieure centrale (26) qui forment une partie des moules, et sont montées au montant central de part et d'autre de la vessie, respectivement,
la partie de moule supérieure centrale (24) pouvant être montée et démontée librement du montant central (16),
**caractérisés en ce que**
un bord externe (26E) dans une direction radiale de la partie de moule inférieure centrale (26) est située au niveau d'un côté extérieur dans la direction radiale de moule d'un emplacement qui correspond à la moitié d'une hauteur de section de pneumatique (H) des moules (21).

2. Moules tels que revendiqués dans la revendication 1, qui sont utilisés pour un moulage par vulcanisation d'un pneumatique lourd, dans lesquels
un élément de moule qui vient en butée contre des surfaces extérieures du pneumatique est structuré par un moule supérieur (21) et un moule inférieur (29),
la partie de moule supérieure centrale (24) constitue une partie du moule supérieur, et
la partie de moule inférieure centrale (26) constitue une partie du moule inférieur.

3. Procédé de vulcanisation d'un pneumatique utilisant les moules selon la revendication 2, comprenant :
un pneumatique cru (30) ajusté au montant central (16) qui a été retiré des moules (12),
le pneumatique cru étant pris en sandwich entre la partie de moule supérieure centrale (24) et la partie de moule inférieure centrale (26), et la vessie (18) étant gonflée à l'intérieur du pneumatique cru avec une pression d'air de remplissage de 50 kPa ou moins, grâce à quoi le pneumatique cru est maintenu par l'unité de maintien de pneumatique (14),
l'unité de maintien de pneumatique étant portée au-dessus du moule inférieur (29), et étant abaissée afin de charger le pneumatique cru et l'unité de maintien de pneumatique sur le moule inférieur, et
les moules étant fermés en vue de la vulcanisation.
